# EUROPEAN PATENT APPLICATION

(11) **EP 4 261 194 A1**
(43) Date of publication of application: **18.10.2023**
(21) Application number: 22305554.2
(22) Date of filing: 14.04.2022
(51) Int. Cl.: C03B 3/02, C03B 1/00, C03C 1/00, C03C 1/02, B09B 3/40

(54) **SMOULDERING METHOD**

(71) Applicant: SAINT-GOBAIN ISOVER, 92400 Courbevoie (FR)
(72) Inventor: RASMUSSEN, Mona Ammitzboell, 2300 Copenhague (DK); JESSEN, Erling, 2300 Copenhague (DK)
(74) Representative: Saint-Gobain Recherche

(57) **Abstract**

A method for processing a mineral wool mixture containing organic material by smouldering combustion, characterized in that it comprises a first step of initiating the combustion of the mineral wool mixture by supplying energy, and a subsequent step of maintaining the smouldering combustion in a self-sustaining regime.

## Description

The present invention relates to a method for processing a mineral wool mixture, a smouldering furnace adapted for implementing this method, and the resulting processed mineral wool. The invention also relates to a raw material composition including such processed mineral wool, its implementation in a glass melting furnace, and the subsequent manufacturing of mineral wool fibers.

In the sense of the invention, such a mineral wool mixture comprises one or more types of non-combustible mineral fibers originating from the production of said fibers (factory waste), from building sites (construction site waste or demolition site waste) and/or from recycling channels allowing the recovery of such fibers from end products, whether or not they have been used. Indeed, the various stages of mineral wool production generate a certain amount of waste that enters the composition of said mineral wool mixture. This waste may come from the cutting of products (and/or discarded products), for example, and it contains sufficient quantities of organic materials such as resins called "binders" and intended to ensure the mechanical cohesion of the fibrous mats. The mineral wool insulation products derived from processing the fibrous mat are all certified as non combustible products, as the organic content is below the prescribed limits of reaction to fire by testing calorimetric values, non-flaming when heated and exposed to a flames, all as listed in the e.g. EN13501-1 'Fire classification of construction products and building elements'. Other types of materials can be combined with mineral fiber products, e.g. paper, aluminum or fibrous mats, for further enhancement of product uses. And when the mineral wool products become waste, it can furthermore be contaminated or purposefully added with bituminous films, wastes from wind mills or wooden pallet parts. Such mineral fibers may in particular consist of glass and/or rock. They are then known as glasswool and stonewool, respectively.

In this context, and as described in the text of patent EP1771391B1, it is known to "recycle" such a mineral wool mixture by melting it in a glass furnace, so as to produce cullet or in other words, a mineral material suitable for use as a vitrifiable raw material in a subsequent glass melting process. Among the many advantages of such a recycling of mineral wool waste is the improvement of the energy efficiency of the glass furnace, as the collected mineral wool mixture and/or the cullet resulting from its melting is easier to melt than a "conventional" raw material composition comprising, among others, large quantities of silica.

Despite these advantages, it has been found by the inventors that in practice, glass melting furnaces still need significant amounts of external energy, such as thermal, electrical energy, gaseous fuel (for example CO2 releasing fossil fuel), in order to melt the whole organic content. In some cases, mineral wool scraps even had to be melted twice before being rid of any organic material. The claimed invention is intended to provide a technical solution to the disadvantages described hereinbefore. More particularly, in at least one embodiment, the invention relates to a method for processing a mineral wool mixture containing organic material by smouldering combustion, characterized in that it comprises a first step of initiating the combustion of the mineral wool mixture by supplying energy, and a subsequent step of maintaining the smouldering combustion in a self-sustaining regime.

According to the invention, smouldering combustion is considered as being in a self-sustaining regime when maintained without any additional supply of energy. In practice, no any additional energy source is needed - such as thermal, electrical energy, gaseous fuel (for example CO2) - since the organic material is removed by its own calorimetric potential. In contrast, traditional glass melting method are based on flame combustion, which requires a constant supply of energy.

As detailed in the specification, the mineral wool mixture to be processed is certified as being non-combustible. This teaching could not be ignored or contested, and would have naturally lead the skilled person away from any technical solution involving a combustion. Against all odds, the inventors have however overcome this technical prejudice by taking advantage of the own organic content of the mineral wool mixture, and the benefits of the smouldering combustion, to remove or at least reduce significantly its organic content while limiting the overall energy consumption.

According to one particular embodiment, maintaining the smouldering combustion in a self-sustaining regime comprises a step of compressing the mineral wool mixture, preferentially by a screw or stamping compression, to a volumic mass between 50 and 1000 kg/m3, preferentially between 150 and 600 kg/m3.

Obtaining a volumic mass within these ranges of value ease the smouldering combustion, and therefore the efficiency of the processing of the mineral wool mixture.

According to one particular embodiment, the step of compressing is implemented continuously.

According to one particular embodiment, maintaining the smouldering combustion in a self-sustaining regime comprises a step of supplying the mineral wool mixture in oxygen.

According to one particular embodiment, said oxygen is supplied, preferentially in a mixture of oxygen with air, by a chimney, a ventilator and/or a dedicated reactor.

According to one particular embodiment, the molar concentration of oxygen at the glowing front of the mineral wool mixture is between 10% and 25%, preferably between 15% and 22%, preferably between 16% and 21%.

In the sense of the invention, the expression "glowing front" refers to the thermally most active area of the mineral wool mixture.

A special advantage of smouldering combustion in a relatively low oxygen combustion is that carbon residue from binders are preserved in the material and if the material afterwards is used as a geopolymer (with no heating or further combusting of the carbon), this will sequester the carbon residue from binders. In addition, the sequestered carbon residue can act as a grey colouring of the geopolymer.

According to one particular embodiment, the excess heat from smouldering combustion is recovered, preferentially for supplying a heat pump and or a heater.

According to one particular embodiment, the mineral wool mixture to be processed consists in glass wool which comprises, excluding the binder:
SiO2: 50 to 75% by weight, preferentially 60 to 70% by weight,
AI203: 0 to 8% by weight, preferentially 1 to 6% by weight,
CaO+MgO: 5 to 20% by weight
Iron oxide: 0 to 3% by weight, preferentially less than 2% by weight,
Na2O+K2O: 12 to 20% by weight,
B2O3: 0 to 10% by weight, preferentially 2 to 8% by weight.

According to one particular embodiment, the ground mineral wool mixture comprises, excluding the binder:
SiO2: 30 to 75% by weight,
CaO+MgO: 5 to 40% by weight,
AI203: 0 to 30% by weight,
Na2O+K2O: 0 to 20% by weight,
Iron oxide: 0 to 15% by weight.

According to one particular embodiment, the ground mineral wool mixture consists of a stonewool (also called "black glass" by the person skilled in the art) which comprises, excluding the binder:
SiO2: 30 to 50% by weight,
Al2O3: 10 to 22% by weight,
CaO+MgO: 20 to 40% by weight,
Iron oxide: 0 to 15% by weight,
Na2O+K2O: 1 to 10% by weight.

According to one particular embodiment, the ground mineral wool mixture consists of a aluminosilicates which comprises, excluding the binder:
SiO2: 30 to 50% by weight, preferentially 35 to 45% by weight,
Al2O3: 10 to 27% by weight,
CaO+MgO: 11 to 40% by weight
Iron oxide: 0,5 to 15% by weight, preferentially 3 to 12% by weight,
Na2O : 0 to 10% by weight, preferentially 0,4 to 7% by weight,
K2O: 0 to 2% by weight, preferentially 0 to 1% by weight.

According to one particular embodiment, the mineral wool mixture to be processed comprises metallic foil, especially aluminium foil.

The treatment by smouldering combustion of mineral wool waste containing aluminium foil, for example from its facings, is especially advantageous. Indeed, after glowing and subsequent grinding/milling, the silicate from the mineral wool waste and the aluminium from the foil will be very much fit to form a feedstock for geopolymers, with the advantage that the aluminum foil does not have to be peeled of the waste before its re-using.

In at least one embodiment, the invention also relates to a smouldering furnace adapted for implementing such a method for processing a mineral wool mixture, characterized in that it comprises at least one smouldering combustion chamber adapted to receive the mineral wool mixture to be processed, and at least of initiator, preferentially a heater, to initiate the smouldering combustion, without any additional source of energy. According to one particular embodiment, the initiator is removable.

In at least one embodiment, the invention also relates to a processed mineral wool mixture as obtained following the implementation of such a method of processing, preferentially by implementing such a smouldering furnace. According to one particular embodiment, the processed mineral wool mixture is a feedstock for geopolymers.

In the sense of the invention, geopolymers refer to inorganic, typically ceramic, alumino-silicate forming long-range, covalently bonded, non-crystalline (amorphous) networks. These geopolymers form a hard material that can replace environmentally problematic cementitious materials. The forming of geopolymers with the processed mineral wool as a feedstock also allows to sequester the carbon residue from binders left in the processed mineral wool by including the carbon residue in the amorphous network of the geopolymers, therefore reducing the environmental footprint of the overall process.

In at least one embodiment, the invention also relates to a raw material composition suitable for being fed into the melting chamber of an installation suitable for obtaining cullet, glass wool and/or rock wool, textile glass yarns, flat glass and/or hollow glass, characterized in that it comprises such a processed mineral wool mixture.

In at least one embodiment, the invention also relates to a method for melting such a raw material composition.

According to one particular embodiment, such a composition of raw materials can be melted in a glass furnace with submerged and / or emerged burners, in an electric furnace, and / or in a hybrid furnace using both at least one burner and electrodes. After leaving the furnace, the molten composition can either be immediately fiberized, or be first transformed into cullet and later (subsequently) melted again and fiberized in order to obtain a mineral wool product.

In at least one embodiment, the invention also relates to a method for manufacturing mineral fibers, characterized in that it comprises the implementation of such a melting method, and a subsequent step of fiberizing the molten composition.

In at least one embodiment, the invention also relates to a computer program product, which comprises program code instructions for implementing the method for processing a mineral wool mixture, when the program is executed on a computer or a processor.

In at least one embodiment, the invention also relates to a non-transitory computer-readable medium comprising a computer program product recorded thereon and capable of being run by a processor, including program code instructions for implementing such a method for processing a mineral wool mixture.

The invention can be better understood with reference to the following description and drawings, given by way of example and not limiting the scope of protection, and in which:
- Figure 1 is a diagram illustrating a smouldering furnace according to one embodiment of the invention,
- Figure 2 is a flow chart of the successive steps implemented when performing a method for processing a mineral wool mixture followed by a method for manufacturing mineral fibers, according to one embodiment of the invention,
- Figure 3 is a schematic block diagram illustrating an apparatus for implementing a processing method, according to one embodiment of the invention.

The components in the figures are not necessarily to scale, emphasis instead being placed upon illustrating the principles of the disclosure.

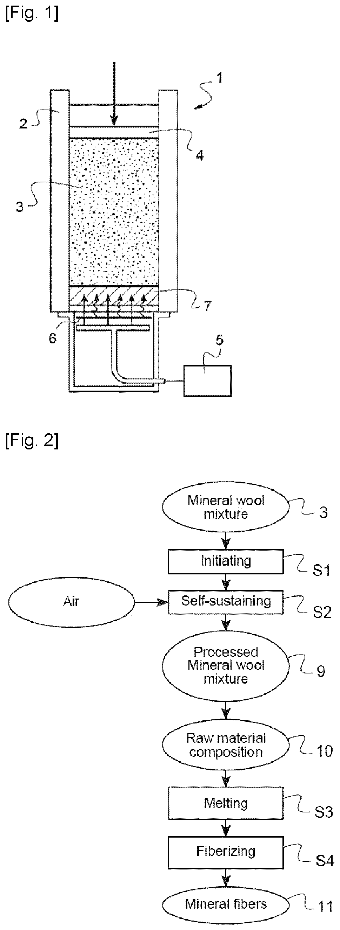

Many specific details of certain embodiments of the disclosure are set forth in the following description and in figures 1 to 3 to provide a thorough understanding of the different embodiments. A skilled person, however, will understand that the present disclosure may have additional embodiments, or may be practiced without several of the details described in the following description.

Figure 1 illustrates a smouldering furnace 1 according to one embodiment of the invention, which comprises a smouldering combustion chamber 2 defined by a roof on the top, side walls, and a floor, and adapted to receive a mineral wool mixture 3 to be processed according to a method illustrated in Figure 2. In a first step, the mineral wool mixture 3 is introduced within the smouldering combustion chamber 2 through its side walls, by dedicated feeders (not illustrated). The mineral wool mixture 3 is then compressed by a press 4, while being supplied in oxygen by a dedicated circuit 5, through the floor of the chamber.

The smouldering combustion is then initiated (step S1) by a heater 6 located under the floor, which brings the lower portion of the mineral wool mixture, that is to say its "glowing front" 7, to a temperature of 400-800°Celcius during e.g. 15-90 minutes.

Following this initiation step (S1), the heater 6 is stopped, so that the smouldering combustion transitions to a self-sustaining regime (step S2) in which, by definition, no any additional energy is supplied.

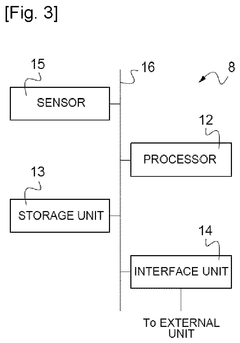

Throughout the whole smouldering process, values of pressure, temperature and oxygen content at the glowing front 7 are continuously measured by dedicated sensors 15 (illustrated in Figure 3) and sent to a controlling apparatus 8 described in more details in the following description. In return, this controlling apparatus 8 is continuously commanding the press 4 and an oxygen supply 5 in order to maintain at the glowing front a volumic mass between 150 and 600 kg/m3, and an oxygen molar concentration between 16% and 21%.

It this particular embodiment, the mineral wool mixture 3 introduced within the smouldering combustion chamber consists in glass wool which comprises, excluding the binder:
SiO2: 50 to 75% by weight, preferentially 60 to 70% by weight,
Al2O3: 0 to 8% by weight, preferentially 1 to 6% by weight,
CaO+MgO: 5 to 20% by weight
Iron oxide: 0 to 3% by weight, preferentially less than 2% by weight,
Na2O+K2O: 12 to 20% by weight,
B2O3: 0 to 10% by weight, preferentially 2 to 8% by weight.

The facings of this glass wool is coverd with aluminium foil, which is therefore also introduced within the smouldering furnace.

In another particular embodiment, the mineral wool mixture 3 introduced within the smouldering combustion chamber consists in stonewool which comprises, excluding the binder:
SiO2: 30 to 50% by weight,
Al2O3: 10 to 22% by weight,
CaO+MgO: 20 to 40% by weight,
Iron oxide: 0 to 15% by weight,
Na2O+K2O: 1 to 10% by weight.

Following the self-sustaining regime (step S2), which is to say at the end of the smouldering combustion processing, the silicate from the glass wool waste and the aluminium from the foil will be very much fit to make a geopolymer. At this stage, the processed mineral wool mixture 9 can either be used as such in various industrial applications known by the skilled person, or be incorporated - alone or with other components - into a raw material composition 10 that is fed into a glass melting installation.

The raw material composition 10 is then melted (step S3) either to produce cullets or, as illustrated by Figure 2, to be transformed by a fiberizing machine (step S4) into new glass fibers 11.

Figure 3 is a schematic block diagram illustrating an example of an apparatus for implementing a method for processing a mineral wool mixture by smouldering combustion, according to one particular embodiment of the invention.

An apparatus 8 illustrated in Figure 3 includes a processor 12, a storage unit 13, an interface unit 14 and several sensors 15, which are connected by a bus 16. Of course, constituent elements of the computer apparatus 8 may be connected by a connection other than a bus connection using the bus 16. The processor 12 controls operations of the apparatus 8. The storage unit 13 stores at least one program to be executed by the processor 12, and various data, including values of oxygen content and pressure to be implemented in the glowing front, parameters used by computations performed by the processor 12, intermediate data of computations performed by the processor 12, and so on. The storage unit 13 may notably store the values of temperature, pressure and oxygen content measured and provided by the dedicated sensors 15. The processor 12 may be formed by any known and suitable hardware, or software, or by a combination of hardware and software. For example, the processor 12 may be formed by dedicated hardware such as a processing circuit, or by a programmable processing unit such as a CPU (Central Processing Unit) that executes a program stored in a memory thereof. The storage unit 13 may be formed by any suitable storage or means capable of storing the program, data, or the like in a computer-readable manner. Examples of the storage unit 13 include non-transitory computer-readable storage media such as semiconductor memory devices, and magnetic, optical, or magneto-optical recording media loaded into a read and write unit. The program causes the processor 12 to perform and control the processing of the mineral wool mixture by smouldering combustion as described above with reference to Figure 2.

The interface unit 14 provides an interface between the apparatus 8 and an external apparatus. The interface unit 14 may be in communication with the external apparatus via cable or wireless communication. In this embodiment, the external apparatus may be the smouldering furnace, the glass melter and or the fiberizing machine.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code, and so forth), or an embodiment combining software and hardware aspects.

Although the present disclosure has been described with reference to one or more examples, a skilled person will recognize that changes may be made in form and detail without departing from the scope of the disclosure and/or the appended claims.

## Claims

1. A method for processing a mineral wool mixture (3) containing organic material by smouldering combustion, **characterized in that** it comprises a first step of initiating (S1) the combustion of the mineral wool mixture by supplying energy, and a subsequent step of maintaining the smouldering combustion in a self-sustaining regime (S2).

2. A processing method according to claim 1, **characterized in that** maintaining the smouldering combustion in a self-sustaining regime (S2) comprises a step of compressing the mineral wool mixture, preferentially by a screw or stamping compression (4), to a volumic mass between 50 and 1000 kg/m3, preferentially between 150 and 600 kg/m3.

3. A processing method according to claim 2, **characterized in that** the step of compressing is implemented continuously.

4. A processing method according to any of claims 1 to 3, **characterized in that** maintaining the smouldering combustion in a self-sustaining regime (S2) comprises a step of supplying the mineral wool mixture in oxygen.

5. A processing method according to claim 4, **characterized in that** the molar concentration of oxygen at the glowing front of the mineral wool mixture is between 10% and 25%, preferably between 15% and 22%, preferably between 16% and 21%.

6. A processing method according to any of claims 1 to 5, **characterized in that** the excess heat from smouldering combustion is recovered, preferentially for supplying a heat pump and or a heater.

7. A processing method according to any of claims 1 to 6, **characterized in that** the mineral wool mixture (3) to be processed consists in glass wool which comprises, excluding the binder:
SiO2: 50 to 75% by weight, preferentially 60 to 70% by weight,
Al2O3: 0 to 8% by weight, preferentially 1 to 6% by weight,
CaO+MgO: 5 to 20% by weight
Iron oxide: 0 to 3% by weight, preferentially less than 2% by weight,
Na2O+K2O: 12 to 20% by weight,
B2O3: 0 to 10% by weight, preferentially 2 to 8% by weight.

8. A processing method according to any of claims 1 to 7, **characterized in that** the mineral wool mixture (3) to be processed comprises metallic foil, especially aluminium foil.

9. Smouldering furnace (1) adapted for implementing a method according to any of claims 1 to 8, **characterized in that** it comprises at least one smouldering combustion chamber (2) adapted to receive the mineral wool mixture (3) to be processed, and at least of initiator (6), preferentially a heater, to initiate the smouldering combustion, without any additional source of energy.

10. Processed mineral wool mixture (9) as obtained following the implementation of a method of processing according to any of claims 1 to 8, preferentially by implementing a smouldering furnace (1) according to claim 9.

11. Processed mineral wool mixture (9) according to claim 10, **characterized in that** it is a feedstock for geopolymers.

12. A raw material composition (10) suitable for being fed into the melting chamber of an installation suitable for obtaining cullet, glass wool and/or rock wool, textile glass yarns, flat glass and/or hollow glass, **characterized in that** it comprises a processed mineral wool mixture (9) according to any of claims 10 and 11.

13. A method for melting (S3) a raw material composition (10) according to claim 12.

14. A method for manufacturing mineral fibers (11), **characterized in that** it comprises the implementation of a melting method (S3) according to claim 13, and a subsequent step of fiberizing (S4) the molten composition.

15. Computer program product, which comprises program code instructions for implementing the method according to any of claims 1 to 8, when the program is executed on a computer or a processor.

16. A non-transitory computer-readable medium comprising a computer program product recorded thereon and capable of being run by a processor (12), including program code instructions for implementing a method according to any one of claims 1 to 8.
